(19) Europäisches Patentamt
European Patent Office
Office européen des brevets

(11) **EP 3 491 582 B1**

(12) **FASCICULE DE BREVET EUROPEEN**

(45) Date de publication et mention
de la délivrance du brevet:
**17.04.2024 Bulletin 2024/16**

(21) Numéro de dépôt: **17765217.9**

(22) Date de dépôt: **28.07.2017**

(51) Classification Internationale des Brevets (IPC):
*G06V 10/20* $^{(2022.01)}$  *G06V 20/00* $^{(2022.01)}$

(52) Classification Coopérative des Brevets (CPC):
**G06V 20/00; G06V 10/255**

(86) Numéro de dépôt international:
**PCT/FR2017/052145**

(87) Numéro de publication internationale:
**WO 2018/020194 (01.02.2018 Gazette 2018/05)**

(54) **PROCÉDÉ DE COMPARAISON D'OBJETS DISPOSÉS AU VOISINAGE LES UNS DES AUTRES, ET DISPOSITIF ASSOCIÉ**

VERFAHREN ZUM VERGLEICHEN VON OBJEKTEN, DIE IN DER NÄHE VONEINANDER POSITIONIERT SIND, UND ZUGEHÖRIGE VORRICHTUNG

METHOD FOR COMPARING OBJECTS POSITIONED IN THE VICINITY OF ONE ANOTHER, AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2016 FR 1601170**

(43) Date de publication de la demande:
**05.06.2019 Bulletin 2019/23**

(73) Titulaire: **EASYPICKY**
**34000 Montpellier (FR)**

(72) Inventeur: **RENAUD, Pacull**
**13570 Barbentane (FR)**

(74) Mandataire: **Jacobacci Coralis Harle**
**32, rue de l'Arcade**
**75008 Paris (FR)**

(56) Documents cités:
**EP-A1- 3 038 028    WO-A2-2009/027836**

- **TAO LI ET AL: "A survey on wavelet applications in data mining", ACM SIGKDD EXPLORATIONS NEWSLETTER, ASSOCIATION FOR COMPUTING MACHINERY, INC, US, vol. 4, no. 2, 1 décembre 2002 (2002-12-01), pages 49-68, XP058187523, ISSN: 1931-0145, DOI: 10.1145/772862.772870**
- **MARK S SCHMALZ: "On the convergence of image compression and object recognition", 43RD ACM SOUTHEAST CONFERENCE, ACM, KENNESAW, GA, USA, 18 March 2005 (2005-03-18), pages 382-387, XP058193382, DOI: 10.1145/1167253.1167343 ISBN: 978-1-59593-059-0**

**Description**

DOMAINE TECHNIQUE AUQUEL SE RAPPORTE L'INVENTION

La présente invention concerne de manière générale le domaine des procédés d'analyse d'un ensemble d'objets disposés au voisinage les uns des autres.

Elle concerne notamment un tel procédé, au cours duquel les objets dudit ensemble sont reconnus par traitement d'image, pour pouvoir caractériser cet ensemble d'objets.

Elle concerne aussi un tel procédé, au cours duquel les objets dudit ensemble, reconnus par traitement d'image, sont comparés les uns aux autres.

Elle s'applique de manière particulièrement intéressante à l'analyse du contenu d'un rayonnage de magasin, et à l'aide à la comparaison d'objets similaires tels que des bouteilles de vin.

ARRIERE-PLAN TECHNOLOGIQUE

On connaît un procédé d'identification de bouteilles de vin selon lequel un utilisateur est invité à prendre une photographie individuelle d'une bouteille et reçoit en réponse les caractéristiques de la bouteille identifiée.

Ce procédé ne permet de comparer plusieurs bouteilles entre elles que dans la mesure où l'utilisateur prend une photographie individuelle de chaque bouteille, reçoit les caractéristiques associées à chaque bouteille et les compare.

Ce procédé connu est essentiellement destiné à récolter des informations concernant une bouteille en particulier mais il est relativement long et fastidieux pour l'utilisateur lorsqu'il s'agit de comparer plusieurs bouteilles entre elles.

On connaît par ailleurs du document EP 3038028, comme du document WO 2009/027836, un procédé comprenant l'acquisition d'une image d'un rayonnage pourvu de plusieurs objets à vendre, ainsi qu'un traitement de cette image permettant d'identifier ces différents objets. Ce procédé est mis en oeuvre au moyen d'un réseau de plusieurs ordinateurs connectés entre eux.

Dans le procédé du document WO 2009/027836, les résultats de cette identification sont exploités pour reconstituer un planogramme, représentatif de l'état du rayonnage concerné.

Dans le procédé du document EP 3038028, un numéro d'ordre est attribué à chaque objet identifié, ce numéro repérant l'ordre de l'objet dans le rayonnage, par rapport aux autres objets.

Mais, dans chacun de ces deux procédés, le traitement de l'image acquise et l'identification des objets présents dans celle-ci nécessite un temps de calcul important.

Il est d'ailleurs noté que cette identification est difficile techniquement. En effet, le nombre de pixels décrivant chaque objet est nécessairement réduit, puisque plusieurs objets sont présents simultanément dans la même image. En outre, ces différents objets présentent généralement de grandes similarités, les uns par rapport aux autres.

OBJET DE L'INVENTION

Afin de remédier aux inconvénients précités de l'état de la technique, la présente invention propose un procédé d'analyse d'un ensemble d'objets disposés au voisinage les uns des autres, comprenant les étapes suivantes :

a) capturer une image globale dudit ensemble d'objets,
b1) détecter, dans l'image globale capturée à l'étape a), au moins deux desdits objets, et pour chaque objet détecté, sélectionner une portion de l'image globale, ladite portion incluant ledit objet,
b2) pour chaque objet détecté à l'étape b1), déterminer au moins un coefficient caractéristique, représentatif dudit objet, par compression de la portion de l'image globale incluant ledit objet,
c) reconnaître chaque objet détecté à l'étape b) parmi une liste prédéterminée d'objets, sur la base du coefficient caractéristique dudit objet déterminé à l'étape b2), et
d) comparer les objets reconnus à l'étape c) entre eux en fonction d'au moins un critère déterminé, ou déterminer une donnée représentative dudit ensemble d'objets en fonction des objets reconnus à l'étape c).

Plus précisément, chaque portion de l'image globale inclue l'objet auquel elle est associée, à l'exclusion des autres objets dudit ensemble.

Comme mentionné plus haut, du fait que plusieurs objets sont présents simultanément dans l'image globale, le nombre de pixels décrivant chaque objet, c'est-à-dire le nombre de pixels de la portion correspondante de l'image globale, est nécessairement réduit.

Par exemple, lorsque l'image globale comprend une centaine de bouteilles de vin, le nombre de pixels décrivant chaque étiquette est généralement inférieur à $200{\times}200$ pixels environ, ce qui est à peine suffisant pour distinguer certains des caractères imprimés sur cette étiquette.

Dans ce contexte, alors même que la résolution initiale de chaque portion de l'image globale est faible, l'invention propose de compresser cette portion d'image avant de procéder à la reconnaissance de l'objet correspondant. Cette compression réduit encore la taille des données décrivant l'objet à reconnaitre.

La demanderesse a en effet constaté, de manière particulièrement surprenante, qu'un niveau de fiabilité élevé, pouvant dépasser 90%, peut être obtenu pour la reconnaissance desdits objets effectuée à l'étape c), malgré la compression appliquée aux différentes portions de l'image globale.

Dans certains cas, la demanderesse a même constaté que cette compression entraîne une augmentation de ce niveau de fiabilité. Une explication possible de cet effet est que cette compression permet d'éliminer différents bruits susceptibles d'affecter l'image capturée.

Réduire la taille des données décrivant chaque objet à reconnaitre permet par ailleurs d'accélérer avantageusement la reconnaissance de cet objet, effectuée à l'étape c).

Grâce à cette compression, même avec un dispositif électronique portatif disposant de capacités de calcul limitées, tel qu'un téléphone cellulaire (téléphone portable), les étapes a) à d) peuvent être exécutées en un temps bref, par exemple inférieur à une minute, ce qui est particulièrement commode pour un utilisateur de ce dispositif.

Selon une caractéristique non limitative du procédé selon l'invention, il est d'ailleurs prévu d'exécuter l'ensemble des étapes b1), b2), c) et d) en temps réel, c'est-à-dire en un temps inférieur à 20 secondes.

Le procédé selon l'invention peut également comprendre une étape e) d'affichage :

- du résultat de la comparaison effectuée à l'étape d), ou
- de ladite donnée, représentative de l'ensemble d'objets, déterminée à l'étape d).

Préférentiellement, l'étape e) est elle aussi exécutée en temps réel, en affichant le résultat de l'étape d) au moyen d'un écran du dispositif électronique portatif précité.

Dans un mode d'affichage, dit de réalité augmentée, le résultat de l'étape d) peut en particulier être superposé, sur l'écran, à l'image globale capturée à l'étape a).

La rapidité d'exécution du procédé selon l'invention est particulièrement intéressante lorsque ce mode d'affichage est employé. Elle permet en effet d'afficher le résultat de l'étape d) alors que l'utilisateur du dispositif électronique portatif est encore situé en vis-à-vis de l'ensemble d'objets à analyser (elle permet d'afficher ce résultat avant que cet utilisateur ne se soit déplacé).

On peut prévoir en outre que l'ensemble des étapes a) à e) soit exécuté plusieurs fois successivement, pour mettre à jour continûment l'image globale affichée et les résultats correspondant obtenus à l'étape d), de manière à ce qu'ils correspondent, à chaque instant, aux objets faisant face à l'utilisateur.

Comme déjà indiqué, la compression réalisée à l'étape b2) autorise une exécution autonome du procédé par un même dispositif électronique portatif, au lieu des réseaux d'ordinateurs de l'art antérieur précité, même si ce dispositif dispose de capacités de calcul, de stockage, et de transfert de données (bande passante du ou des bus de données du dispositif) limitées.

Il est d'ailleurs prévu, de manière optionnelle, d'exécuter les étapes a) à d), ou a) à e), au moyen d'un même dispositif électronique portatif, tel que mentionné ci-dessus. Autrement formulé, il est prévu que ce dispositif électronique portatif exécute les étapes précitées de manière autonome, sans pour cela échanger de données avec d'autres appareils électroniques.

Cette disposition simplifie la mise en oeuvre du procédé selon l'invention.

Elle permet en outre à un utilisateur d'exécuter ce procédé même si le dispositif électronique ne dispose pas d'un accès à un réseau de communication, ce qui intéressant en pratique. En effet, dans un magasin, ou dans un lieu de stockage tel qu'un hangar, où l'exécution du procédé selon l'invention s'avérerait particulièrement utile, il est fréquent les communications électroniques sans fil, via le réseau GSM par exemple, soient lentes, voire impossibles.

Cette disposition permet en outre de protéger efficacement le caractère privé des données obtenues au cours du procédé, ce qui est intéressant notamment du fait que ces données peuvent être relatives à des caractéristiques commerciales ou économiques de l'ensemble d'objets analysé, potentiellement confidentielles.

La compression de chaque portion de l'image globale est réalisée au moyen d'une transformation en ondelettes de ladite portion de l'image globale, ladite transformation en ondelettes comprenant un calcul d'un produit de corrélation entre :

- des données représentatives de ladite portion de l'image globale, et
- une fonction de base, en ondelette, ladite fonction de base étant paramétrée par un facteur d'échelle, une extension spatiale de ladite fonction de base étant d'autant plus grande que ledit facteur d'échelle est grand.

La demanderesse a constaté que, pour des valeurs bien choisies du facteur d'échelle, ce type de compression réduit fortement la taille des données décrivant chaque objet à reconnaitre, tout en conduisant à une fiabilité de reconnaissance élevé.

Il est d'ailleurs prévu, plus précisément, d'effectuer ladite transformation en ondelettes pour une valeur donnée du facteur d'échelle, cette valeur étant déterminée lors d'une phase initiale de paramétrisation du procédé, préalablement à l'exécution des étapes a) à d). Cette valeur est déterminée en fonction du nombre d'objets présents dans ladite liste prédéterminée.

Lorsque cette liste comprend un grand nombre d'objets similaires, deux quelconques de ces objets sont généralement proches l'un de l'autre, en ce sens qu'ils présentent de nombreuses similitudes. Il est alors souhaitable, pour chaque portion de l'image globale, de conserver un niveau de détail relativement élevé, pour pouvoir distinguer deux tels objets l'un de l'autre.

À cette fin, on s'assure, que la valeur donnée du facteur d'échelle est d'autant plus petite que le nombre d'objets présents dans ladite liste est grand.

On peut prévoir aussi que la valeur donnée du facteur d'échelle soit déterminée en fonction d'un niveau de fiabilité souhaité pour la reconnaissance desdits objets effectuée à l'étape c). Ce niveau de fiabilité souhaité peut par exemple être supérieur ou égal à 90%.

On peut prévoir également que la valeur donnée du facteur d'échelle soit comprise entre :

- une valeur maximale du facteur d'échelle, au-delà de laquelle le niveau de fiabilité de reconnaissance desdits objets est inférieur au niveau de fiabilité souhaité, et
- un quart de ladite valeur maximale.

Une telle valeur du facteur d'échelle permet d'obtenir un niveau de fiabilité de reconnaissance supérieur au niveau de fiabilité souhaité, tout en compressant suffisamment la taille des données décrivant chaque objet à reconnaitre pour permettre, en pratique, une exécution en temps réel du procédé.

La valeur maximale du facteur d'échelle, au-delà de laquelle le niveau de fiabilité de reconnaissance desdits objets est inférieur au niveau de fiabilité souhaité, dépend du nombre de pixel décrivant, dans cette image, chaque objet à reconnaitre, et donc de la résolution de l'image globale capturée.

Il est donc prévu préférentiellement, lors de la phase initiale de paramétrisation du procédé, de déterminer la valeur donnée du facteur d'échelle sur la base d'images capturées par le même dispositif que celui destiné à exécuter les étapes a) à d).

A cet égard, la demanderesse a constaté que, lorsque la liste prédéterminée d'objets comprend 300 objets similaires ou plus, et que, dans l'image globale, chaque objet à reconnaitre, par exemple une bouteille ou une boite de produit alimentaire, est décrit par $100 \times 100$ pixels ou plus, alors, un taux de compression aussi élevé que 10, voire même 50, conduit généralement à un niveau de fiabilité de la reconnaissance supérieur à 90 %.

Selon une caractéristique non limitative du procédé, il est ainsi prévu, à l'étape b2), de réaliser la compression de chaque portion de l'image globale avec un taux de compression supérieur à 10, voire supérieur à 50.

La valeur donnée du facteur d'échelle peut en particulier être choisie de manière à conduire à un tel taux de compression.

Il est prévu en particulier d'employer un tel taux de compression lorsque, dans l'image globale, chaque objet à reconnaitre est décrit par $100 \times 100$ pixels ou plus.

Il est noté à nouveau que, lorsqu'un objet tel qu'une boite de produit alimentaire est décrit par $100 \times 100$ pixels environ, le texte présent sur cette boite, par exemple, qui est utile voire indispensable pour la distinguer d'une autre boite de produit alimentaire, est généralement difficilement lisible. Après une compression d'un facteur 10, ce texte n'est plus lisible. Pourtant, les données ainsi compressées s'avèrent suffisantes, moyennant un traitement adapté à l'étape c), pour reconnaitre les objets en question.

Selon une autre caractéristique non limitative du procédé selon l'invention, à l'étape c), la reconnaissance de chaque objet détecté à l'étape b1) est réalisée au moyen d'un réseau de neurones artificiels ayant :

- pour paramètre d'entrée, au moins ledit coefficient caractéristique, représentatif dudit objet, déterminé à l'étape b2), et
- pour paramètre de sortie, au moins une donnée identifiant ledit objet dans ladite liste.

On peut prévoir en outre que ce réseau de neurones artificiels ait également, comme paramètre de sortie, un niveau de confiance associé à la reconnaissance dudit objet.

Selon une caractéristique optionnelle, le réseau de neurones artificiels comprend au plus cinq couches de neurones. En particulier, ce réseau de neurones peut comprendre seulement deux couches de neurones : l'une d'entrée, et l'autre de sortie.

Un nombre de couches de neurones aussi petit est inhabituel lorsqu'il s'agit de reconnaitre un objet dans une image. L'approche habituelle, typique des techniques dites d'apprentissage en profondeur (ou « deep-learning », en anglais), est en effet d'employer un réseau de neurones comprenant une dizaine de couches de neurones, voire plus.

Mais la demanderesse a constaté que, compte tenu de la réduction de la taille des données à traiter due à la compression, un nombre de couches aussi petit conduit néanmoins à une reconnaissance fiable des objets présents dans l'image globale.

Il est d'ailleurs prévu, de manière optionnelle, que le nombre de neurones de la couche de sortie soit égal au nombre d'objets de la liste prédéterminée d'objets, et que le nombre de neurones de la couche d'entrée soit inférieur au triple du nombre de neurones de la couche de sortie.

Ce réseau de neurones artificiels comprend ainsi un nombre de neurones très inférieur à ce qui est l'usage pour ce type d'application.

Grâce à cela, la phase d'apprentissage de ce réseau de neurones est extrêmement rapide. Par exemple, pour apprendre à reconnaitre un objet, parmi une centaine d'objets similaires, ce réseau de neurones doit être préalablement entrainé avec une centaine d'images test environ par objet, représentant chacune un tel objet. A titre de comparaison, avec un réseau de neurones d'une dizaine de couches, pour obtenir un tel niveau de reconnaissance, il est généralement nécessaire d'entrainer le réseau avec plusieurs dizaines de milliers d'images différentes.

D'autres caractéristiques non limitatives et avantageuses du procédé conforme à l'invention, prises individuellement ou selon toutes les combinaisons techniquement possibles, sont les suivantes :

- l'étape b1) est exécutée au moyen d'une méthode de détection par cascade ;
- ladite méthode de détection est une méthode de détection par cascade de Haar ;
- à l'étape d), la donnée représentative dudit ensemble d'objets comprend l'un des éléments suivants :

    - un prix de vente moyen, par unité de longueur, de surface ou de volume, pour ledit ensemble d'objets,
    - une marge de vente moyenne, par unité de longueur, de surface ou de volume, pour ledit ensemble d'objets,
    - un chiffre d'affaire moyen, par unité de longueur, de surface ou de volume, associé audit ensemble d'objets,
    - une rentabilité moyenne, par unité de longueur, de surface ou de volume, associé audit ensemble d'objets,
    - une nombre d'objets d'un type donné présents dans ledit ensemble d'objets ;

- à l'étape d), la donnée représentative dudit ensemble d'objets comprend des informations représentatives d'un écart entre ledit ensemble d'objets et un planogramme cible ;
- à l'étape d), un positionnement ou un prix de vente de l'un des objets reconnus est comparé à un positionnement, ou à un prix de vente d'un autre des objets reconnus ;
- à l'étape d), les objets reconnus à l'étape c) sont comparés entre eux de manière à déterminer, parmi les objets reconnus, celui correspondant le mieux au critère prédéterminé ;
- ledit critère est basé sur au moins l'un des éléments suivants : un prix de vente de chaque objet reconnu, une notation de chaque objet reconnu attribuée par un ou plusieurs utilisateurs, une notation de chaque objet reconnu attribuée par un ou plusieurs experts ;
- à l'étape b1), on mémorise en outre une localisation de chaque objet détecté dans l'image globale ;
- à l'étape d), les objets identifiés à l'étape c) sont comparés à l'aide d'une base de données ;
- le procédé selon l'invention est appliqué à la comparaison de bouteilles d'un même type de boisson ;
- ladite boisson est du vin.

L'invention propose également un dispositif d'analyse d'un ensemble d'objets disposés au voisinage les uns des autres, le dispositif comprenant un capteur d'image et une unité de commande programmée pour :

au cours d'une étape a), commander au capteur d'image de capturer d'une image globale dudit ensemble d'objets, puis
b1) détecter, dans ladite image globale capturée à l'étape a), au moins deux desdits objets, et pour chaque objet détecté, sélectionner une portion de l'image globale, ladite portion incluant ledit objet,
b2) pour chaque objet détecté à l'étape b1), déterminer au moins un coefficient caractéristique, représentatif dudit objet, par compression de la portion de l'image globale incluant ledit objet,
c) reconnaître chaque objet détecté à l'étape b) parmi une liste prédéterminée d'objets, sur la base du coefficient caractéristique dudit objet déterminé à l'étape b2), et
d) comparer les objets reconnus à l'étape c) entre eux en fonction d'au moins un critère déterminé, ou déterminer une donnée représentative dudit ensemble d'objets en fonction des objets reconnus à l'étape c).

Les caractéristiques optionnelles, présentées ci-dessus en termes de procédé, peuvent également être appliquées au dispositif qui vient d'être décrit.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement un ensemble d'objets à analyser, disposés les uns au voisinage des autres dans un rayonnage ;
- la figure 2 représente schématiquement un dispositif d'analyse d'un ensemble d'objets tel que celui de la figure 1 ; et
- la figure 3 représente les principales étapes d'un procédé d'analyse d'un tel ensemble d'objets, mettant en oeuvre les enseignements de l'invention.

Le procédé d'analyse selon l'invention permet, par analyse d'image, d'extraire des informations relatives à un ensemble d'objets disposés les uns au voisinage des autres, notamment pour aider un utilisateur à apprécier le contenu de cet ensemble d'objets.

Ce procédé est plus particulièrement adapté à analyser un ensemble d'objets similaires par leur nature, leur forme ou encore leurs motifs. On notera toutefois qu'il peut aussi s'appliquer à l'analyse d'un ensemble d'objets ne présentant pas de similitudes.

Dans la suite de la description, les objets de l'ensemble d'objets à analyser seront des bouteilles de vin. Ceci n'est nullement limitatif, et les objets peuvent être d'autres types de bouteilles, par exemple des bouteilles d'alcools, de soda, de bière, d'eau ou de lessive, ou encore tout autre type d'objets, par exemple des produits alimentaires pour les humains ou pour les animaux, des produits cosmétiques, des produits ménagers, des produits destinés aux activités sportives, des produits destinés au bricolage, et plus généralement tous les produits disponibles dans le commerce, cette liste n'étant pas exhaustive.

En pratique, on analysera préférentiellement des ensembles d'objets comprenant des objets appartenant à une même catégorie, par exemple des bouteilles de bières, ou encore des bouteilles d'eaux.

On pourra également analyser des ensembles d'objets ayant une forme semblable, par exemple des bouteilles ou des chaussures de sport, ou des ensembles d'objets ayant des dimensions similaires.

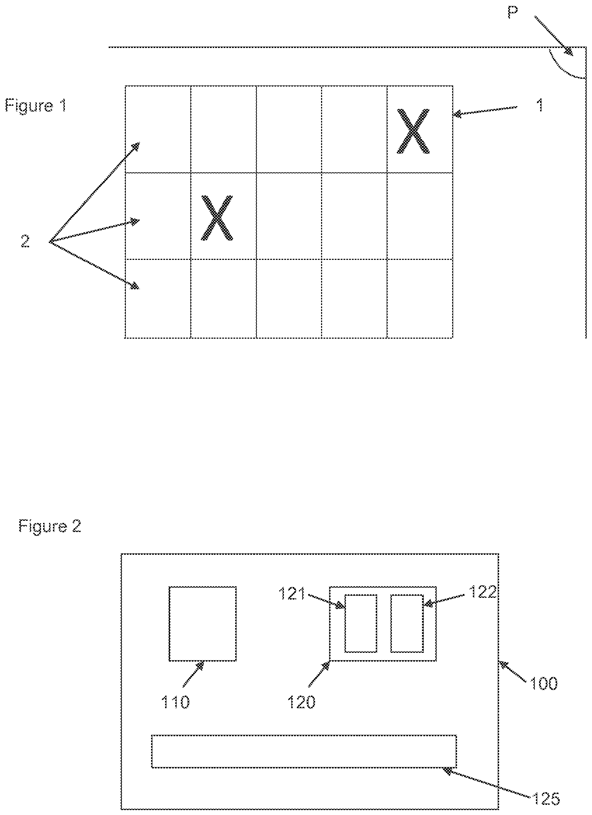

Les objets de l'ensemble à analyser peuvent, comme ici, être disposés sur un rayonnage 1 de magasin, tel que celui représenté sur la figure 1.

Ils pourraient toutefois être disposés sur un rayonnage d'un hangar de stockage, sur une aire de chargement ou de déchargement, ou encore, s'il s'agit de véhicules, sur un parking.

Tel que représenté, le rayonnage 1 comprend une pluralité d'emplacements adjacents, destinés à recevoir des objets proposés à la vente. Les emplacements 2 sont ici alignés sous forme de lignes et de colonnes. Chaque emplacement délimite une zone du rayonnage destinée à recevoir une bouteille de vin.

Le rayonnage 1 comprend ici, à titre d'exemple, trois rangées comprenant chacune cinq emplacements. Certaines zones du rayonnage sont vides, c'est-à-dire dépourvues de bouteille. Elles sont marquées d'une croix sur la figure 1. Le nombre d'objets à analyser est ici relativement petit (en l'occurrence, il est égal à 13). Le procédé selon l'invention est toutefois adaptée à analyser des ensembles d'objets comprenant nettement plus d'objets, par exemple plus de 30, voire plus de 100 objets similaires.

Les emplacements et les zones vides ont ici les mêmes dimensions, mais ce n'est pas nécessairement le cas.

Bien entendu, les emplacements pourraient également être positionnées de façon aléatoire, et présenter une forme et une dimension quelconques.

Ici les bouteilles sont présentées avec leur étiquette principale tournée du côté de l'utilisateur.

En pratique, le rayonnage pourra par exemple être un morceau d'un rayon du magasin, dans lequel sont disposés des produits.

Sur la figure 2, on a représenté schématiquement les principaux éléments d'un dispositif 100 d'analyse selon l'invention.

Le dispositif 100 comprend un capteur d'images 110, tel qu'un appareil photographique numérique ou une caméra vidéo.

Ce capteur d'images 110 est ainsi adaptée à prendre au moins une image du rayonnage 1, ou une vidéo dudit rayonnage 1. Ici, on entend par « vidéo » une pluralité d'images du rayonnage. Cette pluralité d'images peut notamment être capturée alors que l'utilisateur se déplace le long du rayonnage 1, globalement parallèlement au rayonnage 1.

La vidéo revient alors à une succession d'images du rayonnage, deux images successives se recoupant en partie entre elles.

Le capteur d'images 110 est adapté ici à capturer une image comprenant au moins 0,5 million de pixels, préférentiellement plus de 10 millions de pixels.

Cette résolution élevée est utile, car l'objectif est de reconnaître un grand nombre d'objets présents simultanément dans une image, chaque objet n'étant donc décrit que par une partie seulement des pixels de l'image.

Le dispositif 100 comprend également une unité de commande 120 comportant une mémoire 122, par exemple une mémoire non-volatile réinscriptible, et au moins un processeur 121 adapté à exécuter des opérations logiques.

La mémoire 122 contient un programme informatique (appelé aussi « application ») comportant en ensemble d'instructions, l'exécution de ces instructions par le processeur 121 permettant d'effectuer les différentes étapes du procédé d'analyse décrit en détail plus bas (autrement formulé, l'unité de commande 120 est programmée pour exécuter les étapes de ce procédé d'analyse).

Le capteur d'images 110 et l'unité de commande 120 sont en communication l'un avec l'autre de sorte que l'unité de commande 120 peut commander au capteur d'images 110 de capturer une image, et recevoir ensuite cette image à analyser.

Selon une variante sophistiquée, l'unité de commande est adaptée en outre à mémoriser, dans la mémoire 122 ou dans une autre mémoire, les images successivement acquises par le capteur d'images 110, les résultats de l'analyse de ces images, dont les emplacements de chacun des objets détectés et reconnus par le procédé, ainsi qu'un niveau de confiance associé à chaque objet reconnu. Ce niveau de confiance est représentatif de la probabilité que l'objet ait été correctement reconnu.

Le dispositif 100 comprend en outre une interface 125 adaptée à afficher des résultats obtenus au cours du procédé d'analyse selon l'invention, et à afficher une image capturée par le capteur d'images 110.

L'interface 125 est reliée à l'unité de commande 120.

Elle permet à l'utilisateur du dispositif 100 de commander le capteur d'images 110.

L'interface 125 est adapté en outre à recevoir des commandes de l'utilisateur, et à les transmettre à l'unité de commande 120, pour permettre à l'utilisateur, entre autres, de sélectionner différentes options d'exécution du procédé. Par exemple, l'utilisateur peut ainsi sélectionner, parmi différents critères de comparaison, un critère en fonction duquel comparer les objets détectés et reconnus au cours du procédé.

Avantageusement, l'interface 125 est adaptée à afficher en temps réel les résultats obtenus au cours du procédé.

Le dispositif 100 peut par exemple être un dispositif électronique portatif, tel qu'un téléphone cellulaire, notamment de type « smartphone », ou tel qu'une tablette électronique.

L'écran d'affichage du dispositif, préférentiellement du type tactile, et les touches du téléphone forment alors l'interface 125.

L'interface 125 peut aussi comprendre le microphone et/ou le haut-parleur du dispositif. Ainsi, tant les résultats de la comparaison fournis à l'utilisateur à la fin du procédé que les commandes données par l'utilisateur peuvent être des messages sonores.

En complément, le dispositif selon l'invention peut comprendre au moins un accéléromètre adapté à détecter une orientation dudit dispositif, notamment pour repérer si le dispositif est tenu verticalement.

Dans d'autres modes de réalisation, non représentés, le dispositif selon l'invention pourrait être réalisé au moyen :

- d'une caméra de vidéo surveillance installée à demeure à proximité du rayonnage, et
- d'un ordinateur, relié à distance à la caméra de vidéo surveillance, jouant le rôle d'unité de commande.

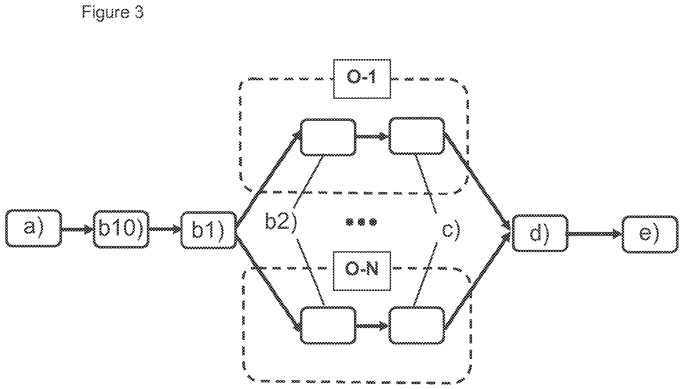

De manière remarquable, l'unité de commande 120 du dispositif 100 est programmée pour effectuer les étapes suivantes du procédé d'analyse selon l'invention (figure 3) :

au cours d'une étape a), commander au capteur d'image 110 de capturer d'une image globale de l'ensemble d'objets, puis

b1) détecter, dans ladite image globale capturée à l'étape a), au moins deux desdits objets, et pour chaque objet détecté, sélectionner une portion de l'image globale, ladite portion incluant ledit objet,

b2) pour chaque objet détecté à l'étape b1), déterminer au moins un coefficient caractéristique, représentatif dudit objet, par compression de la portion de l'image globale incluant ledit objet,

c) reconnaître chaque objet détecté à l'étape b) parmi une liste prédéterminée d'objets, sur la base du coefficient caractéristique dudit objet déterminé à l'étape b2), et

d) comparer les objets reconnus à l'étape c) entre eux en fonction d'au moins un critère déterminé, ou déterminer une donnée représentative dudit ensemble d'objets en fonction des objets reconnus à l'étape c).

La compression réalisée à l'étape b2) permet d'accélérer avantageusement l'exécution de l'étape c), tout en permettant, de manière surprenante, d'obtenir un niveau de fiabilité élevé, pouvant notamment dépasser 90%.

Le niveau de fiabilité correspond au pourcentage de reconnaissances exactes obtenues, en moyenne, lors de l'exécution du procédé.

Le procédé comprend en outre, pour les modes de réalisation décrits ici, une étape e) d'affichage :

- du résultat de la comparaison effectuée à l'étape d), ou
- de ladite donnée, représentative de l'ensemble d'objets, déterminée à l'étape d).

Les étapes a) à e) sont ici exécutées en temps réel, c'est-à-dire en un temps inférieur à 20 secondes, mieux inférieur à 1 seconde, encore mieux inférieur 0,3 secondes. Cette rapidité d'exécution est rendue possible notamment par la compression mentionnée ci-dessus.

Préférentiellement, les étapes a) à e) sont exécutées par le dispositif 100, de manière autonome, sans pour cela qu'il n'échange de données avec d'autres appareils électroniques.

L'utilisateur est alors en mesure d'exécuter ce procédé même si le dispositif 100 électronique ne dispose pas d'un accès à un réseau de communication.

Quatre modes de réalisation du procédé sont décrits plus bas. Les différences entre ces quatre modes de réalisation se situent essentiellement à l'étape d). Les étapes a), b1), b2), et c) sont en revanche identiques, pour ces quatre modes de réalisation, et ne seront décrites qu'une fois.

Etape a)

A l'étape a), l'utilisateur agit sur le capteur d'images 110, via l'interface 125, pour capturer une image globale de l'ensemble d'objets à analyser, compris ici dans un rayonnage, tel que celui décrit plus haut.

De préférence, l'utilisateur positionne le dispositif 100 de sorte qu'une une direction de visée du capteur d'images soit sensiblement orthogonale au rayonnage. Autrement formulé, l'utilisateur positionne de préférence le dispositif 100 pour que le capteur CCD ou CMOS du capteur d'image 120 s'étende parallèlement à un plan P moyen du rayonnage 1.

Selon une variante sophistiquée, à l'étape a) du procédé, des informations d'aide au positionnement du dispositif 100 peuvent être affichée par l'interface 125. Ces informations peuvent par exemple tenir compte des données issues de l'accéléromètre du dispositif, et indiquer à l'utilisateur comment tenir ledit dispositif pour que le capteur CCD ou CMOS du capteur d'image 120 soit vertical.

En pratique, l'utilisateur peut se placer à une distance comprise entre une distance maximale, dépendant de la résolution du capteur d'image, et une distance minimale permettant la visualisation d'au moins 2 objets (préférentiellement d'au moins 10 objets) du le rayonnage 1. Pour cela, l'utilisateur peut par exemple se placer à une distance comprise entre environ 1 mètre et 3 mètres du rayonnage.

En pratique, chaque objet à reconnaitre occupe alors, dans l'image globale, une zone d'au moins 50x50 pixels, par exemple de 100x100 pixels.

Plus précisément, la dimension de chaque bouteille de vin comprise dans les emplacements du rayonnage est comprise ici entre 80x320 pixels, pour les capteurs d'images les moins performants, et 400x1600 pixels voire plus pour des capteurs d'images plus performants.

Etapes b1) et b2)

Alternativement, la méthode de détection utilisée à l'étape b1) peut être une méthode de détection par cascade.

Plus précisément, il s'agit d'une méthode de détection par cascade de Haar.

Au cours d'une telle méthode de détection, l'image globale est parcourue, d'abord à grande échelle, c'est-à-dire en divisant l'image globale en deux grandes portions, puis à des échelles de plus en plus petites, c'est-à-dire en divisant l'image globale en des portions de plus en plus petites et de plus en plus nombreuses.

Par comparaison des portions voisines les unes des autres, des portions d'intérêt, c'est-à-dire des portions d'image contenant un objet, sont détectées.

L'image globale est alors divisée en autant de portions d'intérêt que d'objets compris dans la zone du rayonnage contenue dans l'image globale capturée (donc en au moins deux portions d'intérêt).

Les portions d'intérêt sont par exemple des rectangles dont les dimensions correspondent aux dimensions hors tout des objets à comparer, ou sont légèrement supérieures auxdites dimensions hors tout.

En variante, la méthode de détection pourrait être toute autre méthode de détection connue de l'homme du métier.

La méthode de détection est plus performante lorsque l'image globale est dite « redressée », c'est-à-dire lorsque l'image globale a subi une rotation pour que les lignes parallèles, respectivement perpendiculaires, au sol sur lequel s'appuie le rayonnage soient parallèles, respectivement perpendiculaires, aux bords inférieurs et supérieurs de l'image capturée.

Ainsi, préalablement à l'étape b1), il est possible de mettre en oeuvre une étape additionnelle b10) visant à redresser l'image globale du rayonnage.

Une telle étape additionnelle est connue de l'homme du métier. Il s'agit en général de faire subir à l'image une rotation partielle autour d'un axe de rotation perpendiculaire au plan de l'image.

En variante, il est possible de réaliser l'étape additionnelle de redressement après l'étape b1), préalablement à l'étape b2) du procédé (cette variante n'est pas représentée). Le redressement est alors réalisé sur chaque portion de l'image globale.

Grâce à l'étape b1), l'image globale du rayonnage est découpée en portions d'image, associées respectivement aux différents objets à reconnaître. Autrement formulé, l'étape b1) permet à la fois de détecter les différents objets présents dans l'image globale, et de sélectionner, pour chacun de ces objets, la portion de l'image globale associée à cet objet (c'est-à-dire incluant cet objet, à l'exclusion des autres objets présents dans l'image globale).

En variante, une autre méthode de détection pourrait être utilisée, par exemple une méthode basée sur des motifs binaires locaux (« local binary patterns » en anglais), qui est légèrement plus rapide, mais moins précise qu'une décomposition par cascade de Haar.

Chaque portion d'image obtenue est ensuite préférentiellement redimensionnée, c'est-à-dire qu'elle est transformée en un format standardisé de dimension choisie.

Ainsi, à l'issue du redimensionnement, les portions d'images sont standardisées et présentent toutes la même dimension.

Par exemple, chaque portion d'image standardisée comprend 205 pixels en largeur et 795 pixels en hauteur.

Le redimensionnement est une pratique connue en soi et ne sera pas détaillée plus précisément.

A l'étape b2), pour chaque objet détecté à l'étape b1), l'unité de commande 120 détermine au moins un coefficient caractéristique, représentatif de cet objet, par compression de la portion d'image correspondante, avec un taux de compression donné.

Pour une image en couleurs, le taux de compression est défini ici comme étant égal à trois fois le nombre de pixels de la portion d'image, divisé par le nombre de coefficients caractéristiques obtenus par ladite compression.

A titre d'exemple, considérons la portion d'image standardisée de 205x795 pixels mentionnée plus haut. Cette portion d'image est constituée de 205x795x3 coefficients, le facteur 3 provenant du fait que l'image est codée sur 3 couleurs. Cette portion d'image peut alors être compressée, c'est-à-dire décomposée, sous la forme de 3090x3 coefficients caractéristiques. Le taux de compression est alors égal à (205x795x3)/(3090x3), soit environ 52.

La valeur du taux de compression est choisie de manière à trouver un compromis optimal entre, d'une part, la rapidité d'exécution du procédé, et, d'autre part, la fiabilité de la reconnaissance effectuée à l'étape c).

Pour les modes de réalisation décrits ici, lorsqu'un objet à reconnaitre est décrit, dans l'image globale, par plus de 100x100=10000 pixels, un taux de compression supérieur à 10 est employé. Bien que ce nombre de pixels, dévolus initialement à l'objet, soit faible, ce taux de compression conduit, de manière surprenante, à un niveau de fiabilité élevé.

Par exemple, pour la situation décrite ci-dessus dans laquelle le taux de compression vaut 52, un niveau de fiabilité supérieur à 90 % est obtenu en pratique.

On peut prévoir plus généralement, dans le procédé selon l'invention, que chaque objet à reconnaitre soit décrit, dans l'image globale, par plus de 40000 pixels, et que le taux de compression soit suffisamment élevé pour ne conserver, au plus, que $10000 \times 3$ coefficients caractéristiques par objet à reconnaître (pour une image en couleurs). Par exemple, lorsque l'objet à reconnaitre est décrit, dans l'image globale, par $3.10^5$ pixels, le taux de compression sera choisi supérieur à 30.

Le choix d'une méthode de compression bien adaptée, telle que décrite ci-dessous, participe bien sûr au niveau de performance ainsi atteint.

La valeur du taux de compression, appliquée à l'étape b2), est déterminée ici au cours d'une phase préliminaire de paramétrisation du procédé (non représentée), en fonction notamment :

- du nombre de pixels attendus en moyenne dans l'image globale,
- du type d'objets à reconnaître, et
- du nombre d'objets contenus dans la liste prédéterminée, à distinguer les uns de autres.

Cette valeur est déterminée ici de manière à obtenir un niveau de fiabilité supérieur à un seuil souhaité, par exemple supérieur à 90%.

Cette valeur du taux de compression peut par exemple être obtenue en déterminant, pour différentes valeurs tests, le niveau de fiabilité obtenu, et en sélectionnant, parmi ces valeurs test, la plus grande valeur permettant d'obtenir un niveau de fiabilité supérieur au seuil souhaité.

La compression de chaque portion de l'image globale est réalisée au moyen d'une transformation en ondelettes de ladite portion de l'image globale.

Cette transformation en ondelettes permet de conserver les informations les plus caractéristiques de chaque portion d'images.

Elle est basée ici sur une famille de fonctions de base orthonormées.

Plusieurs familles de telles fonctions de base sont envisageables, notamment la famille de Coiflets ou encore la famille de Daubechies.

La transformée en ondelettes comprenant plus précisément un calcul d'un produit de corrélation entre :

- des données f(x,y) représentatives de ladite portion d'image considérée, et
- une fonction de base $\Psi_{a,b_x,b_y}(x, y)$, en ondelette,
  conformément à la formule F1 ci-dessous :

$$C_{f,a}(b_x, b_y) = \iint_{-\infty}^{\infty} f(x,y)\Psi^*_{a,b_x,b_y}(x,y)\, dx\, dy \quad [\text{F1}]$$

Les variables x et y repèrent la position d'un point dans la portion d'image, et la notation « * » représente le complexe conjugué.

La quantité f(x,y) est représentative (pour une couleur donnée) de l'intensité lumineuse au point (c'est-à-dire au pixel) de coordonnées x et y de la portion d'image.

La fonction de base $\Psi_{a,b_x,b_y}(x, y)$ est quant à elle de la forme :

$$\Psi_{a,b_x,b_y}(x,y) = \Psi_a\left(\frac{x-b_x}{a}, \frac{y-b_y}{a}\right).$$

Cette fonction de base est ainsi paramétrée par le facteur d'échelle a, qui détermine l'extension spatiale cette fonction de base. Cette extension est d'autant plus grande que le facteur d'échelle « a » est grand. Le facteur d'échelle « a » est un nombre réel positif. Les variables $b_x$ et $b_y$ correspondent quant à elles à des nombres réels, pouvant être positifs ou négatifs.

Les coefficients caractéristiques, représentatifs de la portion d'image, sont ici les coefficients $C_{f,a}(b_x, b_y)$ de la transformée en ondelettes. C'est-à-dire qu'ils correspondent aux valeurs présentées par la fonction $C_{f,a}$, pour différentes valeurs des variables $b_x$ et $b_y$.

Le nombre de coefficients $C_{f,a}(b_x, b_y)$ calculés à l'étape b2) est d'autant plus petit que le facteur d'échelle a est grand. Autrement formulé, le nombre de couples de valeurs $(b_x, b_y)$, pour lequel la quantité $C_{f,a}(b_x, b_y)$ est calculée, est d'autant plus petit que le facteur d'échelle a est grand.

Ainsi, le taux de compression est d'autant plus grand que le facteur d'échelle « a » est grand.

La valeur du facteur d'échelle « a » est donc choisie en fonction du taux de compression souhaité.

Par exemple, pour la situation décrite ci-dessus (portions d'image standardisée de 205x795 pixels), pour obtenir taux de compression égal à 52, le facteur d'échelle est choisi égal à 8 (ce qui correspond à une décomposition en ondelettes dite de niveau 3). Pour cette même situation, pour a= 4 et a=2, le taux de compression vaut respectivement 14,7 et 3,9.

Ici, les coefficients caractéristiques $C_{f,a}(b_x, b_y)$ sont stockés sous la forme d'un vecteur colonne (unidimensionnel). Trois tels vecteurs, un par couleur, sont ainsi déterminés à l'étape b2), pour chaque portion d'image.

En variante, les coefficients caractéristiques $C_{f,a}(b_x, b_y)$ pourraient toutefois être stockés sous la forme d'un tableau à deux dimensions, comme la portion d'image de laquelle ils sont issus.

Selon une autre variante, au lieu de recourir à une transformation en ondelettes bidimensionnelle, comme ci-dessus, on pourrait prévoir de mettre chaque portion d'image sous la forme d'un vecteur colonne, puis d'appliquer une transformation en ondelettes unidimensionnelle à ce vecteur colonne.

En variante encore, une autre méthode de filtrage qu'une transformée en ondelettes pourrait être utilisée pour compresser les portions d'image sélectionnées à l'étape b1).

Etape c)

Dans certains modes de réalisation décrits ici, la reconnaissance, c'est-à-dire l'identification, de chaque objet détecté à l'étape b1) est réalisée au moyen d'un réseau de neurones artificiels ayant :

- pour paramètre d'entrée, au moins ledit coefficient caractéristique, représentatif dudit objet, déterminé à l'étape b2), et
- pour paramètre de sortie, au moins une donnée identifiant ledit objet dans ladite liste.

Le réseau de neurones a été entraîné au préalable pour reconnaître chaque objet détecté à l'étape b1), parmi les objets de la liste mentionnée précédemment, c'est-à-dire pour déterminer quel est l'objet de ladite liste présent dans la portion d'image considérée.

La liste prédéterminée correspond ici à la liste des bouteilles de vin ayant fait l'objet d'un apprentissage par le réseau de neurones.

L'entraînement du réseau de neurones comprend une première étape consistant à capturer au moins une image de chaque objet, une seconde étape consistant à réduire l'image ainsi capturée à son ou ses coefficients caractéristiques comme il a été expliqué précédemment, une troisième étape consistant à envoyer ce ou ces coefficients caractéristiques en entrée du réseau de neurone, et à envoyer au réseau de neurones une donnée identifiant cet objet dans ladite liste, par exemple le nom de l'objet. C'est le fait d'associer les coefficients caractéristiques de l'image de l'objet, à cette donnée identifiant l'objet, que l'on nomme « apprentissage ».

Le réseau de neurones entraîné recevant en entrée le ou les coefficients caractéristiques d'une image est à même de reconnaître l'objet compris dans cette image et d'y associer la donnée identifiant cet objet.

Cette donnée peut correspondre par exemple au nom d'une bouteille de vin, ou à un numéro ou code référence propre à l'objet, tel qu'un code de type SKU, par exemple (selon l'acronyme anglo-saxon de « Stock Keeping Unit »).

De préférence, pour l'entraînement du réseau de neurones, chaque objet est photographié un grand nombre de fois, sous différents angles, différentes luminosités, différentes positions et dans différents environnements, notamment avec différents arrière-plans. Chacune de ces images est ensuite réduite à ses coefficients caractéristiques, et envoyée au réseau de neurones en correspondance avec la donnée identifiant l'objet. Autrement dit, le réseau de neurones est adapté à mémoriser les coefficients caractéristiques d'un grand nombre d'image d'un même objet, et à associer à ces coefficients caractéristiques la donnée identifiant l'objet.

En pratique, dans le procédé selon l'invention, une fois entraîné, le réseau de neurones reçoit les coefficients caractéristiques de la portion d'image analysée et reconnaît l'objet compris dans cette portion d'image avec un certain niveau de confiance.

Le réseau de neurones est alors adapté à associer aux coefficients caractéristiques de la portion d'image qu'il a reçu en entrée, une donnée correspondant à l'objet identifié, ici le nom de la bouteille, ainsi que le niveau de confiance correspondant.

Le niveau de confiance peut par exemple présenter une valeur comprise entre 1 et -1, ou entre 0 et 1, la valeur 1 correspondant à une reconnaissance que le réseau de neurones estime parfaitement fiable.

Avantageusement, grâce au réseau de neurones et à son entraînement, le procédé selon l'invention est moins sensible aux variations de l'environnement dans lequel se trouve l'objet lorsque son image est capturée, que ce qui serait obtenu avec d'autres techniques.

De manière remarquable, le réseau de neurones artificiels comprend ici au plus cinq couches de neurones, préférentiellement deux.

La demanderesse a en effet constaté que, notamment grâce à la réduction de la taille des données à traiter due à la compression, un nombre de couches aussi petit conduit néanmoins à une reconnaissance fiable des objets présents dans l'image globale.

Par ailleurs, le nombre de neurones de la couche de sortie peut, comme ici, être égal au nombre d'objets de la liste prédéterminée.

Plus précisément, chaque neurone de la couche de sortie est associé ici à l'un des objets de la liste prédéterminée. Ce neurone délivre une donnée indiquant si l'objet présent dans la portion d'image considérée correspond l'objet de la liste associé à ce neurone. Cette donnée peut par exemple est délivrée sous la forme d'une valeur binaire, ou d'une valeur comprise entre 0 et 1.

Par ailleurs, ici, le nombre de neurones de la couche d'entrée est inférieur au triple du nombre de neurones de la couche de sortie.

Comme le réseau de neurones comprend alors un nombre de neurones réduit, la phase d'apprentissage décrite ci-dessus est avantageusement rapide, c'est-à-dire que l'entraînement du réseau ne requiert que peu d'images de référence.

En pratique, l'unité de commande 120 peut identifier chacun des objets détectés à l'étape b1) en analysant chaque portion d'image successivement ou en parallèle.

Pour une identification simultanée et en parallèle, il y a autant de réseaux de neurones que de portions d'image à analyser (ou d'objet à identifier), lesdits réseaux de neurones fonctionnant en parallèle.

Une telle variante est représentée sur la figure 3, où les N portions d'image à analyser sont référencées O-1 à O-N.

En variante, on peut aussi analyser les portions d'image (ou identifier les objets détectés) en série, c'est-à-dire les unes à la suite des autres si la compression des images (ou des portions d'image) est suffisante.

Avantageusement, cette variante est plus simple à mettre en oeuvre, mais les portions d'images doivent être plus fortement comprimées, ce qui peut résulter en une moindre fiabilité de reconnaissance.

En variante ou en complément, on pourrait également envisager d'utiliser un réseau de neurones spécifique en fonction d'une géolocalisation donnée du dispositif selon l'invention.

En pratique, le dispositif selon l'invention pourrait comprendre un système de géolocalisation, pour, à l'étape c), géolocaliser le dispositif et choisir le réseau de neurones en fonction de cette géolocalisation.

En variante, il est envisageable que dans une étape préalable à l'étape a) du procédé, l'utilisateur spécifie le nom du commerce et/ou l'adresse du commerce dans lequel il envisage de capturer le rayonnage.

Avantageusement, certains objets étant régulièrement compris dans les rayonnages de certaines enseignes commerciales, et d'autres n'y étant presque jamais présents, cela permet d'optimiser le réseau de neurones aux objets présents dans le rayonnage.

En variante, plutôt que d'être réalisée au moyen d'un réseau de neurones, la reconnaissance effectuée à l'étape c) pourrait être réalisée au moyen d'une autre technique, par exemple une technique dite du « voisin le plus proche » (« nearest neighbors technique» en anglais), ou encore une technique basée sur des classifieurs bayesiens naïfs.

Etape d), premier mode de réalisation

Dans le premier mode de réalisation du procédé selon l'invention, à l'étape d), l'unité de commande 120 compare les objets reconnus à l'étape c) entre eux de manière à déterminer, parmi les objets reconnus, celui correspondant le mieux au critère prédéterminé mentionné plus haut.

Ce critère peut être basé sur au moins l'un des éléments suivants :

- un prix de vente de chaque objet reconnu,
- une notation de chaque objet reconnu par un ou plusieurs utilisateurs,
- une notation de chaque objet reconnu par un ou plusieurs experts.

Plus particulièrement, dans le cas des bouteilles de vin à comparer, le ou les critères de comparaison peuvent être choisi parmi : le prix, les mets avec lesquels déguster ce vin, la notation par les autres utilisateurs du procédé, la notation par des experts, la durée de conservation, leur provenance, le degré d'alcool, la région de production, l'appellation, les cépages, la façon de produire le vin (notamment selon des méthodes d'agriculture biologique ou raisonnée), selon le titre de celui qui propose le vin (viticulteur, vigneron, récoltant, propriétaire, métayer, négociant, coopérateur, entrepositaire agréé).

Le critère est choisi par l'utilisateur, au moyen de l'interface 125.

Pour comparer ainsi les objets identifiés, en fonction du critère choisi par l'utilisateur, l'unité de commande peut faire appel à une base de données stockant, pour chaque objet de ladite liste :

- la donnée identifiant cet objet, mentionnée précédemment (nom de la bouteille de vin, numéro SKU, ...), et
- le prix de vente, la notation, ou toute autre caractéristique associée à l'objet.

S'agissant de bouteilles de vin, cette base de données peut en particulier comprendre des caractéristiques telles que : leur durée de conservation, leur caractéristiques gustatives, leur provenance, leur degré d'alcool, leur conseil de dégustation (mets avec lesquels déguster ce vin, température idéale...), la région de production, l'appellation, les cépages, la façon de produire le vin (notamment selon des méthodes d'agriculture biologique ou raisonnée), le titre de celui qui propose le vin (viticulteur, vigneron, récoltant, propriétaire, métayer, négociant, coopérateur, entrepositaire agréé), le millésime, la couleur du vin (rouge/blanc/rosé), la nature du vin (tranquille ou effervescent).

Ainsi, une fois les bouteilles reconnues à l'étape c) du procédé, le procédé compare les bouteilles en fonction du ou des critères choisis, grâce à la base de données.

Les résultats de la comparaison pourront, à l'étape e) ultérieure, apparaître sur l'interface 125 sous la forme d'un classement, l'objet correspondant le mieux aux critères de l'utilisateur apparaissant en premier.

Les résultats de la comparaison pourront notamment apparaître sur l'interface en réalité augmentée avec une animation.

La comparaison peut par exemple consister à classer les bouteilles par ordre de prix croissants, ou par notation décroissante (les bouteilles les mieux notées apparaissant en premier), ou encore par notation décroissante dans une gamme de prix donnée et une couleur de vin choisies par l'utilisateur.

On pourra par exemple choisir d'afficher sur l'interface les trois résultats les plus pertinents à l'issu du procédé selon l'invention, c'est-à-dire ceux qui sont le mieux classés à l'issu de l'étape d) du procédé selon l'invention.

Dans le cas des bouteilles de vin, il sera bien entendu possible d'associer en plus aux objets détectés des conseils d'utilisation, par exemple la température de dégustation, ou les autres mets avec lesquels déguster la bouteille.

Dans une variante du procédé, il est possible de prévoir que le dispositif selon l'invention communique avec une mémoire externe au dispositif. Cette mémoire externe est adaptée à stocker l'image de l'objet le plus pertinent, c'est-à-dire classé en première position dans les résultats de la comparaison, ainsi que les paramètres d'entrée envoyés au réseau de neurones et que les paramètres de sortie du réseau de neurones obtenus pour cette image.

En pratique, il serait alors possible de faire valider par l'utilisateur, ou par l'intervenant extérieur ayant accès à la mémoire externe, que l'objet reconnu par le réseau de neurone correspond bien à l'image capturée.

Si l'utilisateur et/ou l'intervenant valide la reconnaissance, les coefficients caractéristiques de l'image correspondante peuvent alors être ajoutés dans le réseau de neurones, en correspondance avec la donnée associée à l'objet en question. Autrement dit, l'apprentissage du réseau de neurones est alors mis à jour et/ou amélioré au fur et à mesure de l'utilisation du procédé par les utilisateurs.

En variante ou en complément, il serait également envisageable de récupérer les coefficients caractéristiques des trois meilleurs résultats affichés par le procédé selon l'invention, et pas seulement de l'objet le plus pertinent.

En variante encore, on pourrait prévoir que la mémoire externe ne stocke que les coefficients caractéristiques de l'image et les paramètres de sortie du réseau de neurones obtenus pour cette image.

Avantageusement, cela permettrait de limiter la quantité d'informations échangées entre les utilisateurs et la mémoire externe.

Etape d), deuxième mode de réalisation

Dans le deuxième mode de réalisation du procédé selon l'invention, à l'étape d), la donnée représentative dudit ensemble d'objets, comprend l'un des éléments suivants :

- un prix de vente moyen, par unité de longueur, de surface ou de volume, pour ledit ensemble d'objets,
- une marge de vente moyenne, par unité de longueur, de surface ou de volume, pour ledit ensemble d'objets,
- un chiffre d'affaire moyen, par unité de longueur, de surface ou de volume, associé audit ensemble d'objets,
- une rentabilité moyenne, par unité de longueur, de surface ou de volume, associé audit ensemble d'objets,
- une nombre d'objets d'un type donné présents dans ledit ensemble d'objets.

La donnée, représentative dudit ensemble d'objets, est déterminée, en fonction des objets reconnus à l'étape c), au moyen par exemple d'une base de données telle que décrite plus haut, comprenant les prix ou marges de vente de chaque objet de la liste prédéterminée, ou des statistiques de vente des objets (affin d'évaluer le chiffre d'affaire moyen attendu pour l'ensemble d'objets présents sur le rayonnage).

Déterminer le nombre d'objets d'un type donné, présents dans ledit ensemble d'objets, permet par exemple à un fabricant de vérifier rapidement qu'un nombre suffisant des produits qu'il fabrique est présenté sur le rayonnage du magasin considéré.

Cela permet également au gérant d'un tel magasin de détecter rapidement d'un type de produit est en rupture de stock (c'est-à-dire qu'il n'est plus présenté à la vente), ou sur le point d'être en rupture de stock, sur ce rayonnage. Cela permet d'anticiper un telle rupture de stock, ou tout au moins d'y remédier rapidement.

On peut prévoir en outre que ladite donnée, représentative de l'ensemble d'objets, comprenne une indication du nombre d'objets d'un type donné restant en réserve dans le magasin où sont présentés les objets du rayonnage venant d'être analysé.

Etape d), troisième mode de réalisation

Dans le troisième mode de réalisation du procédé selon l'invention, à l'étape d), la donnée représentative dudit ensemble d'objets comprend des informations représentatives d'un écart entre ledit ensemble d'objets et un planogramme cible.

Comme cela est bien connu, un planogramme défini une répartition spatiale donnée desdits objets sur le rayonnage 1.

Les informations représentatives de l'écart entre ledit ensemble d'objets et le planogramme cible peuvent elles-mêmes être agencées sous la forme d'un planogramme indiquant, pour chaque emplacement du rayonnage, si l'objet qui y est présent correspond à celui prévu (à cet emplacement) dans le planogramme cible.

Etape d), quatrième mode de réalisation

Dans le quatrième mode de réalisation du procédé selon l'invention, à l'étape d), un positionnement ou un prix de vente de l'un des objets reconnus est comparé à un positionnement, ou à un prix de vente d'un autre des objets reconnus.

On peut prévoir en particulier, à l'étape d) :

- de déterminer une position moyenne (en haut du rayonnage, en bas du rayonnage, à hauteur des yeux...) d'un groupe d'objets donnés, fournis par un même fabricant, ou portant la même marque de fabrique,
- de déterminer une autre position moyenne d'un autre groupe d'objets donnés, par exemple fournis par un autre fabricant, et de

- comparer ces deux positions moyennes.

On peut prévoir aussi, à l'étape d), de calculer un taux d'occupation d'un groupe d'objets donnés, ce taux d'occupation étant égal à la longueur, ou à la surface de rayonnage occupée par ce groupe d'objets, divisée par la longueur, ou la surface totale de rayonnage présent dans l'image globale.

Etape e)

Il est prévu ici, à l'étape e), d'afficher les résultats de l'étape d) en les superposant à l'image capturée à l'étape a) (mode d'affichage dit de réalité augmentée).

On notera que les différents modes de réalisation du procédé qui ont été décrits ci-dessus peuvent être combinés entre eux. Ainsi, par exemple, on peut prévoir, à l'étape d), de déterminer à la fois une rentabilité linéaire moyenne du rayonnage, et de produire un planogramme représentatif de l'état du rayonnage (représentatif de l'écart du rayonnage avec un planogramme cible).

Il est également envisagé, à l'étape d), que ladite donnée, représentative de l'ensemble d'objets à analyser soit représentative du type d'objets majoritairement présents dans cet ensemble (produits laitiers, ou chaussures, ou encore boites de céréales, par exemple), et que, à l'étape e), un planogramme cible prévu pour ce type d'objets soit affiché en réalité augmenté sur l'interface du dispositif.

On peut prévoir en outre que l'ensemble des étapes a) à e) soit exécuté plusieurs fois successivement, pour mettre à jour continûment l'image globale affichée et les résultats correspondant obtenus à l'étape d), de manière à ce qu'ils correspondent, à chaque instant, aux objets faisant face à l'utilisateur.

Par ailleurs, dans une variante de l'un quelconque des quatre modes de réalisation décrits ci-dessus, il est prévu de mémoriser une localisation de chaque objet identifié dans l'image globale du rayonnage.

En pratique, cette variante est mise en oeuvre lorsque plusieurs images successives du rayonnage ont été capturées, par exemple lorsqu'une vidéo du rayonnage est réalisée. Il s'agit alors d'assembler lesdites images successives grâce à un algorithme adapté à superposer les parties des images successives communes les unes aux autres. Les nouveaux objets détectés dans l'image suivante sont alors ajoutés à ceux détectés dans l'image précédente. Il est possible de repérer les nouveaux objets détectés grâce aux positionnements des objets déjà détectés.

Cela permet ainsi de cartographier pas à pas toute la zone du rayonnage capturée par les images successives.

Selon cette variante sophistiquée, il est possible d'envisager une méthode de détection réalisant un découpage plus performant de ladite image globale.

En effet, avec la méthode de détection présentée ci-dessus (cascade de Haar), il est possible de détecter de faux négatifs, à savoir des portions d'image prétendument vides, c'est-à-dire considérées par la méthode de détection comme dépourvues d'objets, alors que ce n'est pas le cas en réalité.

Pour diminuer le nombre de faux négatifs détectés, il est alors envisageable d'utiliser, sur ces portions d'images prétendument vides, un algorithme de détection en parallèle de la détection par cascade de Haar.

Cet algorithme de détection pourra être choisi plus précis que l'algorithme de détection par cascade décrit plus haut. Du fait de son coût en termes de calculs, on pourra choisir de l'utiliser seulement pour la détection des faux négatifs.

Ainsi, deux détections seront réalisées sur la même portion d'image, ce qui limitera la détection de faux négatifs.

Selon cette variante sophistiquée, il est en outre envisageable, à l'étape c) du procédé selon l'invention, de ne reconnaître que les objets nouvellement détectés par la méthode de détection. Ainsi, sur la première image capturée, l'intégralité des objets détectés fait l'objet de la reconnaissance à l'étape c), puis, sur l'image globale suivante, seuls les objets nouvellement détectés font l'objet de la reconnaissance.

Avantageusement, cette variante sophistiquée du procédé selon l'invention permet un gain de temps, les images n'étant analysées qu'en partie.

En revanche, lorsque le niveau de confiance résultant de la reconnaissance par le réseau de neurones est insuffisant, par exemple inférieur à 0,8 en valeur absolue, pour une portion d'une image globale donnée, il sera possible de réitérer la reconnaissance sur le même objet, détecté dans l'image globale suivante.

Ainsi, cet objet subira au moins deux fois l'étape de reconnaissance, ce qui améliorera la fiabilité de sa reconnaissance.

**Revendications**

1. Procédé d'analyse d'un ensemble d'objets disposés au voisinage les uns des autres, comprenant les étapes suivantes :

   a) capturer une image globale dudit ensemble d'objets,

b1) détecter, dans l'image globale capturée à l'étape a), au moins deux desdits objets, et pour chaque objet détecté, sélectionner une portion de l'image globale, ladite portion incluant ledit objet,

b2) pour chaque objet détecté à l'étape b1), déterminer au moins un coefficient caractéristique, représentatif dudit objet, par compression de la portion de l'image globale incluant ledit objet de manière à réduire une taille de données décrivant ledit objet,

c) reconnaître chaque objet détecté à l'étape b) parmi une liste prédéterminée d'objets, sur la base du coefficient caractéristique, représentatif dudit objet, déterminé à l'étape b2), et

d) comparer les objets reconnus à l'étape c) entre eux en fonction d'au moins un critère déterminé, ou déterminer une donnée représentative dudit ensemble d'objets en fonction des objets reconnus à l'étape c),

le procédé étant **caractérisé en ce que**

à l'étape b2), la compression de chaque portion de l'image globale étant réalisée au moyen d'une transformation en ondelettes de ladite portion de l'image globale, ladite transformation en ondelettes comprenant un calcul d'un produit de corrélation entre :

- des données représentatives de ladite portion de l'image globale, et
- une fonction de base, en ondelette, ladite fonction de base étant paramétrée par un facteur d'échelle, une extension spatiale de ladite fonction de base étant d'autant plus grande que ledit facteur d'échelle est grand,

ladite transformation en ondelettes étant effectuée pour une valeur donnée du facteur d'échelle, déterminée préalablement à l'exécution des étapes a) à d), en fonction du nombre d'objets présents dans ladite liste prédéterminée, la valeur donnée du facteur d'échelle étant d'autant plus petite que le nombre d'objets présents dans ladite liste est grand.

2. Procédé selon la revendication 1, dans lequel l'ensemble des étapes b1), b2), c) et d) est exécuté en temps réel.

3. Procédé selon l'une des revendications 1 et 2, comprenant en outre une étape e) d'affichage :

- du résultat de la comparaison effectuée à l'étape d), ou
- de ladite donnée représentative de l'ensemble d'objets déterminée à l'étape d).

4. Procédé selon l'une des revendications 1 à 3, dans lequel les étapes a) à d) sont exécutées par un même dispositif électronique portatif.

5. Procédé selon l'une des revendications 1 à 4, dans lequel, à l'étape b2), la compression de chaque portion de l'image globale est réalisée avec un taux de compression supérieur à 10.

6. Procédé selon l'une des revendications 1 à 5, dans lequel, à l'étape c), la reconnaissance de chaque objet détecté à l'étape b1) est réalisée au moyen d'un réseau de neurones artificiels ayant :

- pour paramètre d'entrée, au moins ledit coefficient caractéristique, représentatif dudit objet, déterminé à l'étape b2), et
- pour paramètre de sortie, au moins une donnée identifiant ledit objet dans ladite liste.

7. Procédé selon la revendication 6, dans lequel une couche de sortie du réseau de neurones comprend un nombre de neurones égal au nombre d'objets de ladite liste prédéterminée, et dans lequel une couche d'entrée du réseau de neurones comprend un nombre de neurones inférieur au triple du nombre de neurones de la couche de sortie.

8. Procédé selon l'une des revendications 6 et 7, dans lequel le réseau de neurones artificiels comprend au plus cinq couches de neurones.

9. Procédé selon l'une des revendications 1 à 8, dans lequel, à l'étape d), la donnée représentative dudit ensemble d'objets comprend l'un des éléments suivants :

- un prix de vente moyen, par unité de longueur, de surface ou de volume, pour ledit ensemble d'objets,
- une marge de vente moyenne, par unité de longueur, de surface ou de volume, pour ledit ensemble d'objets,
- un chiffre d'affaire moyen, par unité de longueur, de surface ou de volume, associé audit ensemble d'objets,
- une rentabilité moyenne, par unité de longueur, de surface ou de volume, associé audit ensemble d'objets,
- une nombre d'objets d'un type donné présents dans ledit ensemble d'objets.

10. Procédé selon l'une des revendications 1 à 9, dans lequel, à l'étape d), la donnée représentative dudit ensemble d'objets comprend des informations représentatives d'un écart entre ledit ensemble d'objets et un planogramme cible.

11. Procédé selon l'une des revendications 1 à 8, dans lequel, à l'étape d), un positionnement ou un prix de vente de l'un des objets reconnus est comparé à un positionnement, ou à un prix de vente d'un autre des objets reconnus.

12. Procédé selon l'une des revendications 1 à 8, dans lequel, à l'étape d) les objets reconnus à l'étape c) sont comparés entre eux de manière à déterminer, parmi les objets reconnus, celui correspondant le mieux audit critère, ledit critère étant basé sur au moins l'un des éléments suivants : un prix de vente de chaque objet reconnu, une notation de chaque objet reconnu, attribuée par un ou plusieurs utilisateurs, une notation de chaque objet reconnu, attribuée par un ou plusieurs experts.

13. Dispositif (100) d'analyse d'un ensemble d'objets disposés au voisinage les uns des autres, le dispositif (100) comprenant un capteur d'image (110) et une unité de commande (120) programmée pour :

au cours d'une étape a), commander au capteur d'image de capturer d'une image globale dudit ensemble d'objets, puis
b1) détecter, dans ladite image globale capturée à l'étape a), au moins deux desdits objets, et pour chaque objet détecté, sélectionner une portion de l'image globale, ladite portion incluant ledit objet,
b2) pour chaque objet détecté à l'étape b1), déterminer au moins un coefficient caractéristique, représentatif dudit objet, par compression de la portion de l'image globale incluant ledit objet de manière à réduire une taille de données décrivant ledit objet,
c) reconnaître chaque objet détecté à l'étape b) parmi une liste prédéterminée d'objets, sur la base du coefficient caractéristique, représentatif dudit objet, déterminé à l'étape b2), et
d) comparer les objets reconnus à l'étape c) entre eux en fonction d'au moins un critère déterminé, ou déterminer une donnée représentative dudit ensemble d'objets en fonction des objets reconnus à l'étape c),
l'unité de commande étant **caractérisée en ce qu'**elle est programmée pour à l'étape b2), la compression de chaque portion de l'image globale étant réalisée au moyen d'une transformation en ondelettes de ladite portion de l'image globale, ladite transformation en ondelettes comprenant un calcul d'un produit de corrélation entre :

- des données représentatives de ladite portion de l'image globale, et
- une fonction de base, en ondelette, ladite fonction de base étant paramétrée par un facteur d'échelle, une extension spatiale de ladite fonction de base étant d'autant plus grande que ledit facteur d'échelle est grand,

ladite transformation en ondelettes étant effectuée pour une valeur donnée du facteur d'échelle, déterminée préalablement à l'exécution des étapes a) à d), en fonction du nombre d'objets présents dans ladite liste prédéterminée, la valeur donnée du facteur d'échelle étant d'autant plus petite que le nombre d'objets présents dans ladite liste est grand.

**Patentansprüche**

1. Verfahren zum Analysieren einer Gesamtheit von Objekten, die nahe beieinander positioniert sind, mit den folgenden Schritten:

a) Aufnehmen eines Gesamtbilds der Gesamtheit von Objekten,
b1) Erfassen mindestens zweier der Objekte in dem im Schritt a) aufgenommenen Gesamtbild und, für jedes der erfaßten Objekte, Auswählen eines Abschnitts des Gesamtbilds, wobei der Abschnitt das Objekt beinhaltet,
b2) für jedes im Schritt b1) erfaßte Objekt: Bestimmen mindestens eines für das Objekt repräsentativen charakteristischen Koeffizienten durch Kompression des das Objekt beinhaltenden Abschnitts des Gesamtbilds, um einen das Objekt beschreibenden Datenumfang zu reduzieren,
c) Erkennen jedes im Schritt b) erfaßten Objekts aus einer Liste von vorbestimmten Objekten auf der Grundlage des im Schritt b2) bestimmten, für das Objekt repräsentativen charakteristischen Koeffizienten und
d) Vergleichen der im Schritt c) erkannten Objekte untereinander in Abhängigkeit von mindestens einem bestimmten Kriterium oder Bestimmen einer für die Gesamtheit von Objekten repräsentativen Angabe in Abhängigkeit von den im Schritt c) erkannten Objekten,
wobei das Verfahren **dadurch gekennzeichnet ist, daß**
im Schritt b2) die Kompression jedes Abschnitts des Gesamtbilds mittels einer Wavelet-Transformation des Abschnitts des Gesamtbilds durchgeführt wird, wobei die Wavelet-Transformation eine Berechnung eines Korrelationsprodukts zwischen

- für den Abschnitt des Gesamtbilds repräsentativen Daten und
- einer Basisfunktion in Wavelets aufweist, wobei die Basisfunktion mit einem Maßstabsfaktor parametriert ist, wobei eine räumliche Ausdehnung der Basisfunktion umso größer ist, je größer der Maßstabsfaktor ist,

wobei die Wavelet-Transformation für einen gegebenen Wert des Maßstabsfaktors erfolgt, der vor der Durchführung der Schritte a) bis d) in Abhängigkeit von der Anzahl der in der vorbestimmten Liste enthaltenen Objekte bestimmt wird, wobei der gegebene Wert des Maßstabsfaktors umso kleiner ist, je größer die Anzahl der in der Liste vorhandenen Objekte ist.

2.  Verfahren gemäß Anspruch 1, wobei die Gesamtheit der Schritte b1), b2), c) und d) in Echtzeit durchgeführt wird.

3.  Verfahren gemäß einem der Ansprüche 1 und 2, das außerdem einen Schritt e) des Anzeigens

- des Resultats des im Schritt d) durchgeführten Vergleichs oder
- der im Schritt d) bestimmten, für die Gesamtheit von Objekten repräsentativen Angabe

aufweist.

4.  Verfahren gemäß einem der Ansprüche 1 bis 3, wobei die Schritte a) bis d) durch ein und dieselbe tragbare elektronische Vorrichtung durchgeführt werden.

5.  Verfahren gemäß einem der Ansprüche 1 bis 4, wobei die Kompression jedes Abschnitts des Gesamtbilds im Schritt b2) mit einer Kompressionsrate von mehr als 10 durchgeführt wird.

6.  Verfahren gemäß einem der Ansprüche 1 bis 5, wobei das Erkennen jedes im Schritt b1) erkannten Objekts im Schritt c) mittels eines Netzes künstlicher Neuronen durchgeführt wird, das

- als Eingangsparameter mindestens den im Schritt b2) bestimmten, für das Objekt charakteristischen Koeffizienten und
- als Ausgangsparameter mindestens eine das Objekt in der Liste identifizierende Angabe
hat.

7.  Verfahren gemäß Anspruch 6, wobei eine Ausgangsschicht des Neuronennetzes eine Anzahl Neuronen aufweist, die gleich der Anzahl Objekte der vorbestimmten Liste ist, und wobei eine Eingangsschicht des Neuronennetzes eine Anzahl Neuronen aufweist, die kleiner als das Dreifache der Anzahl Neuronen der Ausgangsschicht ist.

8.  Verfahren gemäß einem der Ansprüche 6 und 7, wobei das Netz künstlicher Neuronen höchstens fünf Neuronenschichten aufweist.

9.  Verfahren gemäß einem der Ansprüche 1 bis 8, wobei die für die Gesamtheit der Objekte repräsentative Angabe im Schritt d) eins der folgenden Elemente aufweist:

- einen mittleren Verkaufspreis pro Längeneinheit, Oberflächeneinheit oder Volumeneinheit für die Gesamtheit der Objekte,
- eine mittlere Verkaufsspanne pro Längeneinheit, Oberflächeneinheit oder Volumeneinheit für die Gesamtheit der Objekte,
- einen der Gesamtheit der Objekte zugeordneten mittleren Umsatz pro Längeneinheit, Oberflächeneinheit oder Volumeneinheit,
- eine der Gesamtheit der Objekte zugeordnete mittlere Rentabilität pro Längeneinheit, Oberflächeneinheit oder Volumeneinheit,
- eine Anzahl Objekte eines gegebenen Typs, die in der Gesamtheit der Objekte enthalten sind.

10. Verfahren gemäß einem der Ansprüche 1 bis 9, wobei die für die Gesamtheit der Objekte repräsentative Angabe im Schritt d) Informationen aufweist, die für einen Unterschied zwischen der Gesamtheit der Objekte und einem Zielplanogramm repräsentativ sind.

**11.** Verfahren gemäß einem der Ansprüche 1 bis 8, wobei im Schritt d) eine Positionierung oder ein Verkaufspreis eines der erkannten Objekte mit einer Positionierung oder einem Verkaufspreis eines anderen der erkannten Objekte verglichen wird.

**12.** Verfahren gemäß einem der Ansprüche 1 bis 8, wobei die im Schritt c) erkannten Objekte im Schritt d) untereinander verglichen werden, um unter den erkannten Objekten dasjenige zu bestimmen, das dem Kriterium am besten entspricht, wobei das Kriterium auf mindestens einem der folgenden Elemente fußt: ein Verkaufspreis jedes erkannten Objekts, eine von einem oder mehreren Benutzern erteilte Bewertung jedes erkannten Objekts, eine von einem oder mehreren Experten erteilte Bewertung jedes erkannten Objekts.

**13.** Vorrichtung (100) zum Vergleichen von Objekten, die nahe beieinander positioniert sind, wobei die Vorrichtung (100) einen Bildsensor (110) und eine Steuereinheit (120) aufweist, die dazu programmiert ist,

im Verlaufe eines Schritts a) dem Bildsensor zu befehlen, ein Gesamtbild der Gesamtheit der Objekte aufzunehmen, dann
b1) in dem im Schritt a) aufgenommenen Gesamtbild mindestens zwei der Objekte zu erfassen und für jedes erfaßte Objekt einen Abschnitt des Gesamtbilds auszuwählen, wobei der Abschnitt das Objekt beinhaltet,
b2) für jedes im Schritt b1) erfaßte Objekt mindestens einen charakteristischen, für das Objekt repräsentativen Koeffizienten durch Kompression des Abschnitts des Gesamtbilds, der das Objekt aufweist, zu bestimmen, um eine das Objekt beschreibende Datengröße zu reduzieren,
c) jedes im Schritt ab) erfaßte Objekts in einer vorbestimmten Liste von Objekten auf der Grundlage des für das Objekt repräsentativen, im Schritt b2) bestimmten charakteristischen Koeffizienten zu erkennen und
d) die im Schritt c) erkannten Objekte untereinander in Abhängigkeit von mindestens einem bestimmten Kriterium zu vergleichen oder eine für die Gesamtheit von Objekten repräsentative Angabe in Abhängigkeit von den im Schritt c) erkannten Objekten zu bestimmen,
wobei die Steuereinheit **dadurch gekennzeichnet ist, daß** sie dazu programmiert ist, im Schritt b2) die Kompression jedes Abschnitts des Gesamtbilds mittels einer Wavelet-Transformation des Abschnitts des Gesamtbilds durchzuführen, wobei die Wavelet-Transformation eine Berechnung eines Korrelationsprodukts zwischen

- für den Abschnitt des Gesamtbilds repräsentativen Daten und
- einer Basisfunktion in Wavelets aufweist, wobei die Basisfunktion mit einem Maßstabsfaktor parametriert ist, wobei eine räumliche Ausdehnung der Basisfunktion umso größer ist, je größer der Maßstabsfaktor ist,

wobei die Wavelet-Transformation für einen bei der Durchführung der Schritte a) bis d) in Abhängigkeit von der Anzahl der in der vorbestimmten Liste vorhandenen Objekte zuvor bestimmten gegebenen Wert des Maßstabsfaktors durchgeführt wird, wobei der gegebene Wert des Maßstabsfaktors umso kleiner ist, je größer die Anzahl Objekte in der besagten Liste ist.

**Claims**

**1.** Method for analysing a set of objects disposed in the vicinity of one another, comprising the following steps:

a) capturing an overall image of said set of objects,
b1) detecting, in the overall image captured in step a), at least two of said objects, and for each detected object, selecting a portion of the overall image, said portion including said object,
b2) for each object detected in step b1), determining at least one characteristic coefficient, representative of said object, by compressing the portion of the overall image including said object so as to reduce a size of data describing said object,
c) recognising each object detected in step b) from among a predetermined list of objects, based on the characteristic coefficient, representative of said object, determined in step b2), and
d) comparing the objects recognised in step c) with one another according to at least one determined criterion, or determining data representative of said set of objects according to the objects recognised in step c),
the method being **characterised in that**
in step b2), the compression of each portion of the overall image is done by means of a transformation into wavelets of said portion of the overall image, said transformation into wavelets comprising a calculation of a product of correlation between:

- data representative of said portion of the overall image, and
- a base function, in wavelets, said base function being configured by a scale factor, a spatial extension of said base function being even larger as said scale factor is great,

said transformation into wavelets being done for a given value of the scale factor, determined before executing steps a) to d), according to the number of objects present in said predetermined list, the given value of the scale factor being even smaller as the number of objects present in said list is large.

2. Method according to claim 1, wherein the set of steps b1), b2), c) and d) is executed in real time.

3. Method according to one of claims 1 and 2, further comprising a step e) of displaying:

- the result of the comparison performed in step d), or
- said data representative of the set of objects determined in step d).

4. Method according to one of claims 1 to 3, wherein steps a) to d) are executed by one same portable electronic device.

5. Method according to one of claims 1 to 4, wherein, in step b2), the compression of each portion of the overall image is performed with a compression rate greater than 10.

6. Method according to one of claims 1 to 5, wherein, in step c), the recognition of each object detected in step b1) is made by means of an artificial neural network having:

- for an input parameter, at least said characteristic coefficient, representative of said object, determined in step b2), and
- for an output parameter, at least one piece of data identifying said object in said list.

7. Method according to claim 6, wherein an output layer of the neural network comprises a number of neurones equal to the number of objects of said predetermined list, and wherein an input layer of the neural network comprises a number of neurones less than triple the number of neurones of the output layer.

8. Method according to one of claims 6 and 7, wherein the artificial neural network comprises, at most, five layers of neurones.

9. Method according to one of claims 1 to 8, wherein, in step d), the data representative of said set of objects comprises one of the following elements:

- an average sale price, per unit of length, of surface area or of volume, for said set of objects,
- an average sale margin, per unit of length, of surface area or of volume, for said set of objects,
- an average turnover, per unit of length, of surface area or of volume, associated with said set of objects,
- an average profitability, per unit of length, of surface area or of volume, associated with said set of objects,
- a number of objects of a given type present in said set of objects.

10. Method according to one of claims 1 to 9, wherein, in step d), the data representative of said set of objects comprises information representative of a difference between said set of objects and a target planogram.

11. Method according to one of claims 1 to 8, wherein, in step d), a positioning or a sale price of one of the recognised objects is compared with a positioning, or with a sale price of another of the recognised objects.

12. Method according to one of claims 1 to 8, wherein, in step d), the objects recognised in step c) are compared with one another so as to determine, from among the recognised objects, that best corresponding to said criterion, said criterion being based on at least one of the following elements: a sale price of each recognised object, a notation of each recognised object, attributed by one or more users, a notation of each recognised object, attributed by one or more experts.

13. Device (100) for analysing a set of objects disposed in the vicinity of one another, the device (100) comprising an image sensor (110) and a control unit (120) programmed to:

during a step a), controlling the image sensor to capture an overall image of said set of objects, then

b1) detecting, in said overall image captured in step a), at least two of said objects, and for each detected object, selecting a portion of the overall image, said portion including said object,

b2) for each object detected in step b1), determining at least one characteristic coefficient, representative of said object, by compression of the portion of the overall image including said object so as to reduce a size of data describing said object,

c) recognising each object detected in step b) from among a predetermined list of objects, based on the characteristic coefficient, representative of said object, determined in step b2), and

d) comparing the objects recognised in step c) with one another according to at least one determined criterion, or determining data representative of said set of objects according to the objects recognised in step c),

the control unit being **characterised in that** it is programmed for step b2), the compression of each portion of the overall image being performed by means of a transformation into wavelets of said portion of the overall image, said transformation into wavelets comprising a calculation of a product of correlation between:

- data representative of said portion of the overall image, and
- a base function, in wavelets, said base function being configured by a scale factor, a spatial extension of said base function being even larger as said scale factor is great,

said transformation into wavelets being done for a given value of the scale factor, determined prior to executing steps a) to d), according to the number of objects present in said predetermined list, the given value of the scale factor being even smaller as the number of objects present in said list is large.

Figure 1

Figure 2

Figure 3

**EP 3 491 582 B1**

**RÉFÉRENCES CITÉES DANS LA DESCRIPTION**

**Documents brevets cités dans la description**

- EP 3038028 A
- WO 2009027836 A